# EUROPEAN PATENT APPLICATION

(11) **EP 4 807 582 A1**
(43) Date of publication of application: **16.09.2026**
(21) Application number: 24888461.1
(22) Date of filing: 10.10.2024
(51) Int. Cl.: G06F 16/535

(54) **INFORMATION PROCESSING DEVICE, INFORMATION PROCESSING METHOD, AND INFORMATION PROCESSING PROGRAM**

(30) Priority: 06.11.2023 JP 2023189547
(71) Applicant: FUJIFILM Corporation, Tokyo 106-8620 (JP)
(72) Inventor: FUKUMOTO, Mitsuki, Tokyo 106-8620 (JP)
(74) Representative: Parker, Andrew James
(86) International application number: PCT/JP2024/036345
(87) International publication number: WO 2025/100163

(57) **Abstract**

An information processing apparatus acquires a first search result image group as a search result in response to a search input for a search target image group, presents a user interface configured to receive input of an evaluation by a user for at least one search result image included in the first search result image group, and acquires a second search result image group as a re-search result for the search target image group based on the search result image to which the evaluation by the user is assigned via the user interface.

## Description

### BACKGROUND OF THE INVENTION

### 1. Field of the Invention

The present disclosure relates to an information processing apparatus, an information processing method, and an information processing program.

### 2. Description of the Related Art

JP2020-030634A discloses a technology of extracting a plurality of pieces of search result data that match a search condition from a plurality of pieces of search target data and receiving assignment of a positive evaluation to search result data selected from the plurality of pieces of extracted search result data.

### SUMMARY OF THE INVENTION

In the technology disclosed in JP2020-030634A, since a document is used as a search target, in a case where an image is obtained as a search result, there is room for improvement in terms of enabling a user to efficiently assign an evaluation to the image of the search result.

The present disclosure has been made in view of the above circumstances, and an object of the present disclosure is to provide an information processing apparatus, an information processing method, and an information processing program that enable a user to efficiently assign an evaluation to an image of a search result.

According to a first aspect, there is provided an information processing apparatus comprising at least one processor, in which the processor is configured to: acquire a first search result image group as a search result in response to a search input for a search target image group; present a user interface configured to receive input of an evaluation by a user for at least one search result image included in the first search result image group; and acquire a second search result image group as a re-search result for the search target image group based on the search result image to which the evaluation by the user is assigned via the user interface.

According to a second aspect, in the information processing apparatus according to the first aspect, the processor is configured to acquire the second search result image group for the search target image group based on the search input and the search result image to which the evaluation by the user is assigned via the user interface.

According to a third aspect, in the information processing apparatus according to the first or second aspect, the evaluation by the user includes at least a positive evaluation, and in the second search result image group, a search rank of an image, among the search target image group, having a high similarity to the search result image to which the positive evaluation is assigned is set higher.

According to a fourth aspect, in the information processing apparatus according to the first or second aspect, the evaluation by the user includes at least a negative evaluation, and in the second search result image group, a search rank of an image, among the search target image group, having a high similarity to the search result image to which the negative evaluation is assigned is set lower.

According to a fifth aspect, in the information processing apparatus according to any one of the first to fourth aspects, the user interface includes a display region for classifying at least a part of the first search result image group into groups.

According to a sixth aspect, in the information processing apparatus according to the fifth aspect, the processor is configured to select, from among a plurality of different conversion processes of converting the search result images included in the first search result image group into vectors, the conversion process in which a similarity between the search result images classified into the same group is relatively high.

According to a seventh aspect, in the information processing apparatus according to the sixth aspect, the processor is configured to convert each of the search result images included in the first search result image group into a vector by the selected conversion process, and the similarity between the search result images corresponds to a distance using the vectors obtained by the conversion.

According to an eighth aspect, in the information processing apparatus according to any one of the fifth to seventh aspects, the user interface includes an interface configured to receive input of the evaluation by the user for each group.

According to a ninth aspect, in the information processing apparatus according to the third aspect, in a case where the positive evaluation is assigned to a plurality of the search result images, the similarity to the search result images is a statistical value of similarities to the plurality of search result images to which the positive evaluation is assigned.

According to a tenth aspect, in the information processing apparatus according to the fourth aspect, in a case where the negative evaluation is assigned to a plurality of the search result images, the similarity to the search result images is a statistical value of similarities to the plurality of search result images to which the negative evaluation is assigned.

According to an eleventh aspect, in the information processing apparatus according to the third or fourth aspect, the user interface includes an interface configured to receive input of the evaluation by the user for each group for the search result images included in the first search result image group, and the processor is configured to perform weighting on the similarity in accordance with a search priority for each group in a case where the first search result image group is classified into a plurality of different groups.

According to a twelfth aspect, in the information processing apparatus according to any one of the fifth to seventh aspects, the user interface includes an interface capable of classifying the first search result image group into groups having a hierarchical structure, and the closer the hierarchy of the classified groups is, the higher the similarity between the search result images is.

According to a thirteenth aspect, in the information processing apparatus according to any one of the first to twelfth aspects, the user interface includes a display region in which the search result image to which the evaluation by the user is assigned is displayed, and a display region in which the search result image not used for the search for obtaining the second search result image group is displayed.

According to a fourteenth aspect, in the information processing apparatus according to any one of the first to thirteenth aspects, the user interface includes a user interface configured to receive input of the evaluation by the user by an operation of the user for at least one search result image included in the first search result image group.

According to a fifteenth aspect, there is provided an information processing method executed by a processor provided in an information processing apparatus, the method comprising: acquiring a first search result image group as a search result in response to a search input for a search target image group; presenting a user interface configured to receive input of an evaluation by a user for at least one search result image included in the first search result image group; and acquiring a second search result image group as a re-search result for the search target image group based on the search result image to which the evaluation by the user is assigned via the user interface.

According to a sixteenth aspect, there is provided an information processing program causing a processor provided in an information processing apparatus to execute a process comprising: acquiring a first search result image group as a search result in response to a search input for a search target image group; presenting a user interface configured to receive input of an evaluation by a user for at least one search result image included in the first search result image group; and acquiring a second search result image group as a re-search result for the search target image group based on the search result image to which the evaluation by the user is assigned via the user interface.

According to the present disclosure, the user can efficiently assign the evaluation to the image of the search result.

### BRIEF DESCRIPTION OF THE DRAWINGS

FIG. 1 is a block diagram illustrating an example of a configuration of an information processing system.
FIG. 2 is a block diagram illustrating an example of a hardware configuration of a user terminal.
FIG. 3 is a block diagram illustrating an example of a hardware configuration of a server apparatus.
FIG. 4 is a diagram illustrating an example of a search result display screen.
FIG. 5 is a block diagram illustrating an example of a functional configuration of the user terminal.
FIG. 6 is a diagram illustrating an example of the search result display screen.
FIG. 7 is a block diagram illustrating an example of a functional configuration of the server apparatus.
FIG. 8 is a diagram for describing search processing.
FIG. 9 is a sequence diagram illustrating an example of the search processing.
FIG. 10 is a diagram illustrating an example of a search result display screen according to a modification example.
FIG. 11 is a diagram illustrating an example of the search result display screen according to the modification example.

### DESCRIPTION OF THE PREFERRED EMBODIMENTS

Hereinafter, examples of embodiments for implementing the technique of the present disclosure will be described in detail with reference to the drawings.

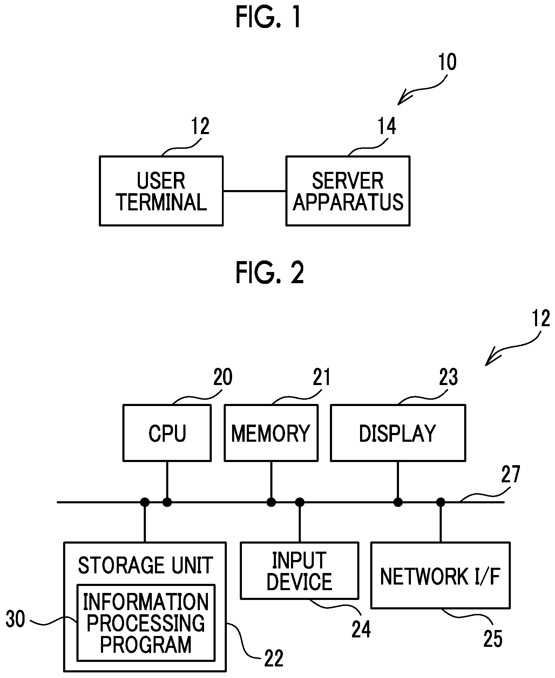

First, a configuration of an information processing system 10 according to the present embodiment will be described with reference to FIG. 1. As illustrated in FIG. 1, the information processing system 10 includes a user terminal 12 used by a user and a server apparatus 14. Examples of the user terminal 12 include a tablet computer and a personal computer. Examples of the server apparatus 14 include a server computer and a cloud server. The user terminal 12 is an example of an information processing apparatus according to the disclosed technology.

Next, a hardware configuration of the user terminal 12 according to the present embodiment will be described with reference to FIG. 2. As illustrated in FIG. 2, the user terminal 12 includes a central processing unit (CPU) 20, a memory 21 as a temporary storage area, and a non-volatile storage unit 22. In addition, the user terminal 12 includes a display 23 such as a liquid crystal display, an input device 24 such as a keyboard and a mouse, and a network interface (I/F) 25 connected to a network. The CPU 20, the memory 21, the storage unit 22, the display 23, the input device 24, and the network I/F 25 are connected to a bus 27. The CPU 20 is an example of a processor according to the disclosed technology.

The storage unit 22 is realized by a hard disk drive (HDD), a solid state drive (SSD), a flash memory, or the like. An information processing program 30 is stored in the storage unit 22 as a storage medium. The CPU 20 reads out the information processing program 30 from the storage unit 22, loads the read out information processing program 30 in the memory 21, and executes the loaded information processing program 30.

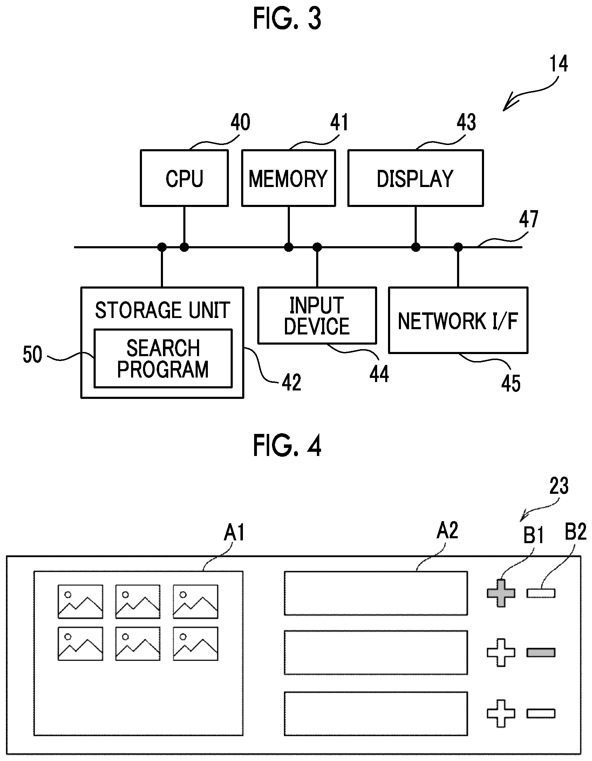

Next, a hardware configuration of the server apparatus 14 according to the present embodiment will be described with reference to FIG. 3. As illustrated in FIG. 3, the server apparatus 14 includes a CPU 40, a memory 41 as a temporary storage area, and a non-volatile storage unit 42. In addition, the server apparatus 14 includes a display 43 such as a liquid crystal display, an input device 44 such as a keyboard and a mouse, and a network I/F 45 connected to a network. The CPU 40, the memory 41, the storage unit 42, the display 43, the input device 44, and the network I/F 45 are connected to a bus 47.

The storage unit 42 is realized by an HDD, an SSD, a flash memory, or the like. A search program 50 is stored in the storage unit 42 as a storage medium. The CPU 40 reads out the search program 50 from the storage unit 42, loads the read out search program 50 in the memory 41, and executes the loaded search program 50.

An outline of image search performed by the information processing system 10 according to the present embodiment will be described with reference to FIG. 4. FIG. 4 is a diagram illustrating an example of a search result display screen displayed on the display 23 of the user terminal 12. As illustrated in FIG. 4, the search result display screen according to the present embodiment includes a display region A1 in which a search result image group is displayed, a display region A2 for classifying at least a part of the search result image group into groups, a button B1 for assigning a positive evaluation, and a button B2 for assigning a negative evaluation.

At least one display region A2 is displayed on the search result display screen, and a plurality of search result images displayed in the same display region A2 are treated as images belonging to the same group. In addition, on the search result display screen, one set of the button B1 and the button B2 is displayed in association with one display region A2. A new display region A2 may be added, or an existing display region A2 may be deleted, by the user performing an operation via the input device 24 of the user terminal 12. In addition, in response to the addition of the new display region A2 by the operation of the user, the button B1 and the button B2 corresponding to the new display region A2 may be added. In addition, in response to the deletion of the display region A2 by the operation of the user, the button B1 and the button B2 corresponding to the deleted display region A2 may be deleted.

The user inputs a search input corresponding to a desired image via the input device 24. For example, in a case where the user desires to obtain an image group of a "sitting dog", the user inputs an image of a "sitting dog" as the search input. The search input may be a text of "sitting dog". A search result image group corresponding to the search input is displayed in the display region A1. In addition to the image of the "sitting dog", the search result image group may include, for example, images, such as a "sitting cat" and a "dog not sitting", which are similar in terms of the images but are not desired by the user.

The user assigns a positive evaluation to a desired image among the search result images displayed in the display region A1 by moving the desired image to the display region A2 to which a positive evaluation is assigned by designating the button B1. In addition, the user assigns a negative evaluation to an undesired image among the search result images displayed in the display region A1 by moving the undesired image to the display region A2 to which a negative evaluation is assigned by designating the button B2. The search result image group displayed in the display region A1 is updated in response to the assigning of the evaluation by the user. The positive evaluation referred to here means a positive evaluation assigned to a search result image similar to the desired image by the user. The negative evaluation means a negative evaluation assigned to a search result image that is not similar to the desired image by the user.

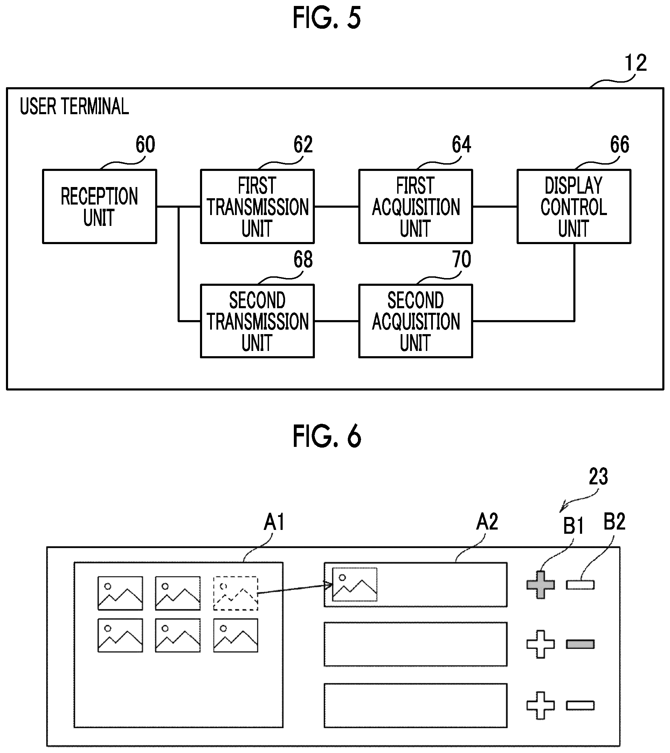

Next, a functional configuration of the user terminal 12 will be described with reference to FIG. 5. As illustrated in FIG. 5, the user terminal 12 includes a reception unit 60, a first transmission unit 62, a first acquisition unit 64, a display control unit 66, a second transmission unit 68, and a second acquisition unit 70. The CPU 20 executes the information processing program 30 to function as the reception unit 60, the first transmission unit 62, the first acquisition unit 64, the display control unit 66, the second transmission unit 68, and the second acquisition unit 70.

The reception unit 60 receives an image (hereinafter, referred to as an "input image") as an example of a search input input by the user via the input device 24. In addition, the reception unit 60 receives an operation of designating the button B1 via the input device 24 by the user. In addition, the reception unit 60 receives an operation of designating the button B2 via the input device 24 by the user. In addition, the reception unit 60 receives an operation by the user for classifying at least a part of the search result image group displayed in the display region A1 into groups. Examples of the operation include an operation of moving the search result image displayed in the display region A1 to the display region A2 by drag and drop.

The first transmission unit 62 transmits the input image received by the first reception unit 60 to the server apparatus 14 via the network I/F 25.

The first acquisition unit 64 acquires a first search result image group as a search result searched for by the server apparatus 14 in accordance with the input image transmitted by the first transmission unit 62, via the network I/F 25.

The display control unit 66 presents a user interface configured to receive input of the evaluation by the user for at least one search result image included in the first search result image group acquired by the first acquisition unit 64. Specifically, the display control unit 66 performs control to display a search result display screen (see FIG. 4) as an example of the user interface on the display 23 to present the search result display screen to the user. In this case, the display control unit 66 performs control to display the first search result image group acquired by the first acquisition unit 64 in the display region A1. Although details will be described later, a search rank is assigned to the first search result image group, and the display control unit 66 performs control to display the first search result image group in the display region A1 in accordance with the search rank. In the present embodiment, the display control unit 66 performs control to display the first search result image group in the display region A1 so that the search ranks are in ascending order from the upper left to the lower right of the display region A1.

As illustrated in FIG. 6, on the search result display screen, the user classifies the search result images into groups by moving the search result images from the display region A1 to the display region A2. The user moves the search result images to be classified into the same group to the same display region A2.

As described above, on the search result display screen, one set of the button B1 and the button B2 is displayed in association with each display region A2. The user assigns an evaluation to the search result image displayed in the corresponding display region A2 by designating the button B1 or the button B2. That is, the search result display screen includes an interface configured to receive input of the evaluation by the user for each group. In the example of FIG. 6, the button B1 or the button B2 designated by the user is displayed in a filled state. That is, in the example of FIG. 6, the user assigns a positive evaluation as the evaluation by the user to the search result image moved to the uppermost display region A2.

As described above, the search result display screen includes an interface configured to receive input of the evaluation by the user through an operation of the user for at least one search result image included in the first search result image group displayed in the display region A1. Examples of the operation of the user in this case include an operation of moving the search result image displayed in the display region A1 to the display region A2 and designating the button B1 or the button B2 corresponding to the display region A2.

For example, in a case where the user searches for the "sitting dog" and an image of the "sitting dog" and an image of the "animal other than the sitting dog" are displayed in the display region A1, the user assigns a positive evaluation to the image of the "sitting dog" by moving the image of the "sitting dog" to the display region A2 in which the button B1 is designated. In addition, in this case, the user assigns a negative evaluation to the image of the "animal other than the sitting dog" by moving the image of the "animal other than the sitting dog" to the display region A2 in which the button B2 is designated.

The user may move the search result image to the display region A2 corresponding to the designated button B1 or the designated button B2 after designating the button B1 or the button B2. In addition, the user may designate the button B1 or the button B2 after moving the search result image to the display region A2. In addition, the user may switch the designation of the button B1 or the button B2 after temporarily designating the button B1 or the button B2.

In addition, in a case where the second acquisition unit 70, which will be described below, acquires the second search result image group, the display control unit 66 performs control to display the second search result image group in the display region A1 to update the display of the display region A1. The search rank is also assigned to the second search result image group, and the display control unit 66 performs control to display the second search result image group in the display region A1 in accordance with the search rank, in the same manner as in the first search result image group.

In a case where the evaluation by the user is assigned via the search result display screen, the second transmission unit 68 transmits the search result image to which the evaluation by the user is assigned to the server apparatus 14 via the network I/F 25. In this case, the second transmission unit 68 assigns identification information such as an ID for identifying each display region A2 to the search result image as tag information. The identification information is also for identifying the group to which the search result image is classified. Therefore, the server apparatus 14 can determine whether the plurality of search result images belong to the same group or to different groups by referring to the tag information of the search result images.

In the present embodiment, each time the evaluation by the user is assigned to the search result image, the second transmission unit 68 transmits the search result image to which the evaluation by the user is assigned to the server apparatus 14 via the network I/F 25. Specifically, each time the user moves the search result image displayed in the display region A1 to the display region A2 in which the button B1 or the button B2 is designated, the search result image to which the evaluation by the user and the identification information are assigned is transmitted to the server apparatus 14. Then, the display of the display region A1 is updated in accordance with the re-search result by the server apparatus 14.

The second acquisition unit 70 acquires, via the network I/F 25, the second search result image group as the re-search result searched by the server apparatus 14 in accordance with the search image to which the evaluation by the user is assigned and transmitted by the second transmission unit 68.

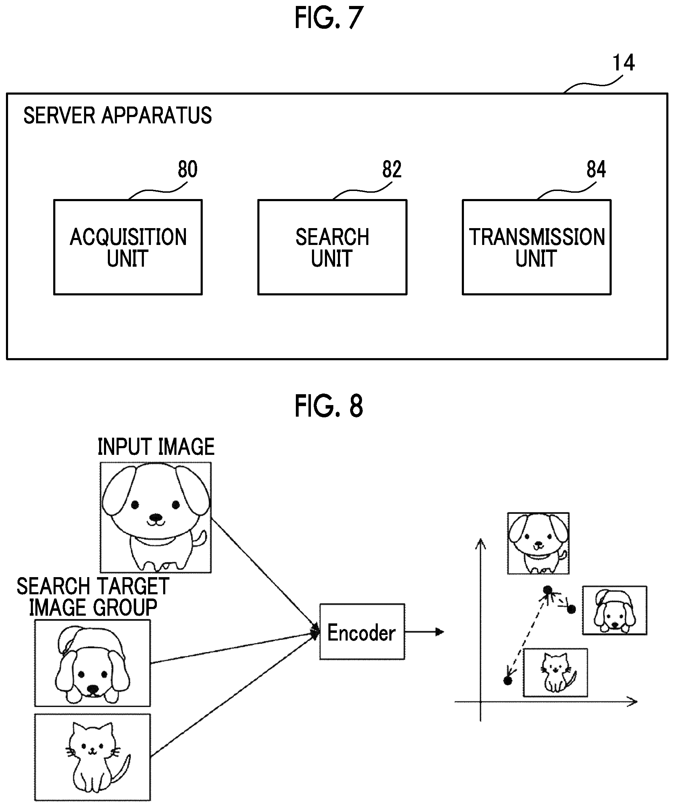

Next, a functional configuration of the server apparatus 14 will be described with reference to FIG. 7. As illustrated in FIG. 7, the server apparatus 14 includes an acquisition unit 80, a search unit 82, and a transmission unit 84. The CPU 40 executes the search program 50 to function as the acquisition unit 80, the search unit 82, and the transmission unit 84.

The acquisition unit 80 acquires the input image transmitted from the user terminal 12 via a network I/F 45. In addition, the acquisition unit 80 acquires, via the network I/F 45, the search result image transmitted from the server apparatus 14, to which the evaluation by the user and the identification information are assigned.

The search unit 82 executes a first search process in accordance with the input image for the search target image group. The search image target image group is, for example, an image stored in an image database, an image published on the Internet, or the like. Hereinafter, a specific example of the first search process will be described.

As illustrated in FIG. 8, the search unit 82 inputs the input image to a trained model called an encoder. The trained model converts the input image into a vector of multiple dimensions and outputs the vector of the conversion result. As a result, the search unit 82 converts the input image into a vector. The trained model is a model obtained in advance by machine learning using a dataset for learning, and includes, for example, a neural network. Similarly, the search unit 82 converts each search target image included in the search image target image group into a vector by inputting the search target image to the trained model.

Next, the search unit 82 derives a similarity between the input image and each search target image in accordance with a distance between the vector obtained by converting the input image and each vector obtained by converting each search target image. In the example of FIG. 8, the distance is indicated by a double arrow of a broken line. Examples of the method of deriving the similarity include a method of deriving the similarity using a p-norm (p = 1, 2, ∞, or the like) or cosine similarity. The search unit 82 assigns a higher search rank to each search target image as the similarity to the input image is higher. The search target image group to which the search rank is assigned as a search result of the first search process is the first search result image group described above. As described above, in the present embodiment, the similarity between the images is used as a search score for determining the search rank.

In addition, the search unit 82 executes a second search process on the search target image group based on the input image and the search result image to which the evaluation by the user is assigned via the search result display screen. The search image target image group is, for example, the same as the search image target image group in the first search process. Hereinafter, a specific example of the second search process will be described.

As in the first search process, the search unit 82 converts the input image into a vector, and derives the similarity between the input image and each search target image according to a distance between the vector obtained by converting the input image and each vector obtained by converting each search target image. In addition, as with the input image, the search unit 82 converts the search result image into a vector, and derives the similarity between the search result image and each search target image according to a distance between the vector obtained by converting the search result image and each vector obtained by converting each search target image.

Then, the search unit 82 assigns a higher search rank to each search target image of the search target image group as the similarity to the search result image to which the positive evaluation is assigned is higher. Specifically, for example, the search unit 82 assigns a higher search rank to each search target image as a total value of the similarity to the input image and the similarity to the search result image is larger.

In addition, the search unit 82 assigns a lower search rank to each search target image of the search target image group as the similarity to the search result image to which the negative evaluation is assigned is higher. Specifically, for example, the search unit 82 assigns a higher search rank to each search target image as a value obtained by subtracting the similarity to the search result image from the similarity to the input image is larger.

As described above, the search target image group to which the search rank is assigned as the re-search result by the second search process is the second search result image group described above. As described above, in the second search result image group, the similarity to the search result image to which the positive evaluation or the negative evaluation is assigned by the user also affects the search rank in addition to the similarity to the input image.

In addition, in a case where there are a plurality of search result images moved to the same display region A1, that is, a plurality of search result images classified into the same group, the search unit 82 may assign the search rank to the search target image group as shown below. That is, in this case, the search unit 82 may select the conversion process in which the similarity between the search result images classified into the same group is relatively high from among a plurality of different conversion processes, the conversion process being the conversion process of converting the search result images included in the first search result image group into the vectors. Hereinafter, a specific example of the selection processing of the conversion process will be described. It is assumed that the plurality of different conversion processes are prepared in advance. The plurality of different conversion processes may be, for example, a plurality of trained models obtained by machine learning using each of a plurality of different datasets for learning. In addition, the plurality of different conversion processes may be a combination of two or more of a trained model and a known algorithm for converting the image into the vector, such as a self-organizing map.

The search unit 82 derives the similarity between the search images classified into the same group according to the distance between the vectors obtained by converting each of the plurality of search result images classified into the same group. In this form example, the search unit 82 derives the similarity between the search images classified into the same group by using each of the plurality of different conversion processes. Then, the search unit 82 selects the conversion process having the highest derived similarity from among the plurality of different conversion processes. In this case, in a case where there are three or more search result images classified into the same group, the search unit 82 may use the statistical value of the similarity between the search images of each of all combinations of two search result images. Examples of the statistical value include a total value, an average value, and a maximum value.

In this case, the search unit 82 performs the second search process described above by using the selected conversion process. As a result, the second search result image group is obtained. As described above, by selecting the conversion process in which the similarity between the search result images classified into the same group is highest by the user, it is possible to improve the possibility that the search rank of the image desired by the user is high.

The transmission unit 84 transmits the first search result image group as the search result by the search unit 82 to the user terminal 12 via the network I/F 45. In addition, the transmission unit 84 transmits the second search result image group as the re-search result by the search unit 82 to the user terminal 12 via the network I/F 45.

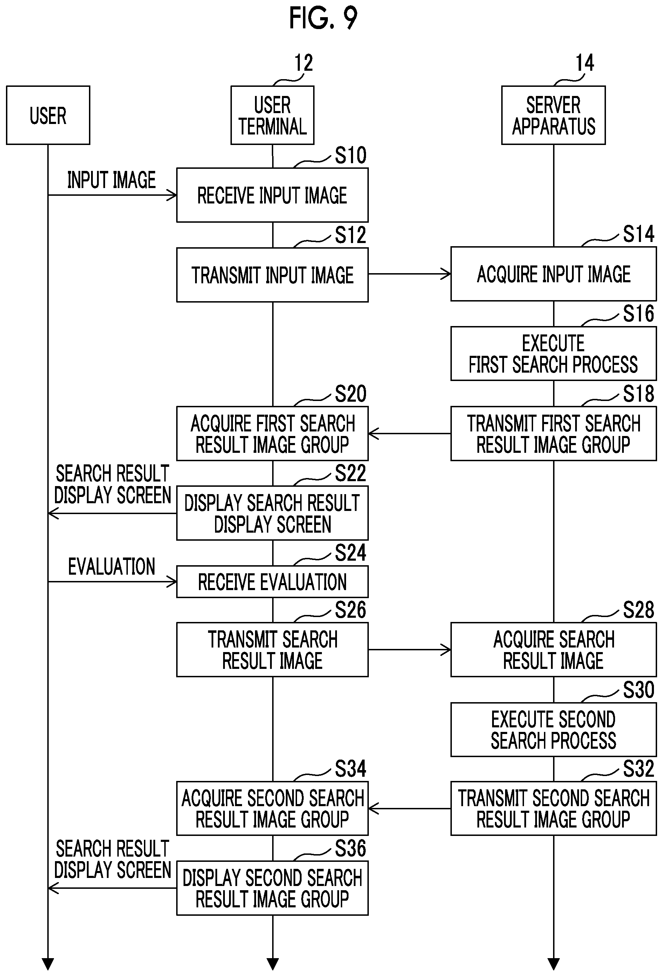

Next, an action of the information processing system 10 will be described with reference to FIG. 9. FIG. 9 is a sequence diagram illustrating an example of the search processing executed by the information processing system 10.

The user inputs the input image via the input device 24. In step S10, the reception unit 60 receives the input image input by the user via the input device 24. In step S12, the first transmission unit 62 transmits the input image received in step S10 to the server apparatus 14 via the network I/F 25.

In step S14, the acquisition unit 80 acquires the input image transmitted from the user terminal 12 in step S12 via the network I/F 45. In step S16, as described above, the search unit 82 executes the first search process according to the input image for the search target image group. The first search result image group is obtained by the processing of step S16. In step S18, the transmission unit 84 transmits the first search result image group as the search result in step S16 to the user terminal 12 via the network I/F 45.

In step S20, the first acquisition unit 64 acquires the first search result image group transmitted from the server apparatus 14 in step S18 via the network I/F 25. In step S22, as described above, the display control unit 66 performs control to display the search result display screen configured to receive input of the evaluation by the user for at least one search result image included in the first search result image group acquired in step S20, on the display 23.

The user performs, on the search result display screen, an operation of assigning the evaluation to the search result image, such as an operation of designating the button B1 or the button B2 and an operation of moving the search result image displayed in the display region A1 to the display region A2. In step S24, the reception unit 60 receives the operation of assigning the evaluation to the search result image performed by the user. In step S26, the second transmission unit 68 assigns the identification information described above to the search result image to which the evaluation by the user is assigned by the operation received in step S24, and transmits the search result image to the server apparatus 14 via the network I/F 25.

In step S28, the acquisition unit 80 acquires, via the network I/F 45, the search result image transmitted from the user terminal 12 in step S26, to which the evaluation by the user and the identification information are assigned. In step S30, as described above, the search unit 82 executes the second search process on the search target image group based on the input image and the search result image acquired in step S28. The second search result image group is obtained by the processing of step S30. In step S32, the transmission unit 84 transmits the second search result image group as the re-search result in step S30 to the user terminal 12 via the network I/F 45.

In step S34, the second acquisition unit 70 acquires the second search result image group transmitted from the server apparatus 14 in step S32 via the network I/F 25. In step S36, as described above, the display control unit 66 updates the display of the display region A1 by performing control to display the second search result image group acquired in step S34 in the display region A1 of the search result display screen.

After step S36, in a case where the user performs an operation of assigning an evaluation for at least one search result image included in the search result image group displayed in the display region A1 or an operation of correcting the evaluation assigned to the search result image moved to the display region A1, the processing after step S24 is executed again.

As described above, according to the present embodiment, the user can efficiently assign the evaluation to the image of the search result. In addition, the user can efficiently collect the desired image.

In the above-described embodiment, in a case where the positive evaluation is assigned to the plurality of search result images, the search unit 82 may use a statistical value of the similarities between the search target image and each of the plurality of search result images as the similarity (that is, the search score) for assigning the search rank in the second search process. Similarly, in a case where the negative evaluation is assigned to the plurality of search result images, the search unit 82 may use a statistical value of the similarities between the search target image and each of the plurality of search result images to which the negative evaluation is assigned as the similarity for assigning the search rank. Examples of the statistical value in these cases include a total value, an average value, and a maximum value.

In addition, in the above-described embodiment, in a case where the first search result image group is classified into the plurality of groups different from each other, the search unit 82 may perform weighting on the similarity with the search target image in accordance with the search priority of each group in the second search process. In this case, for example, the search unit 82 may perform weighting on the similarity so that the search rank is higher as the similarity with the search result image belonging to the group having a higher search priority is higher.

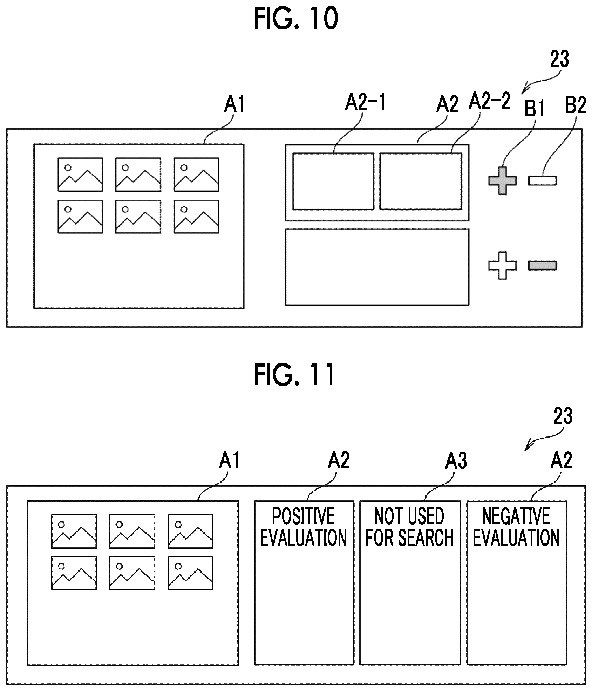

In addition, in the above-described embodiment, the search result display screen may include an interface that enables the first search result image group to be classified into the groups having the hierarchical structure. Specifically, as illustrated in FIG. 10 as an example, the display region A2 may include display regions A2-1 and A2-2. The user classifies, for example, the dog image in the display region A2, classifies the chihuahua image in the display region A2-1, and classifies the doberman image in the display region A2-2. In this case, the group of dog breeds exists in the hierarchy below the group of dogs. In this case, in the second search process, the search unit 82 may derive the similarity between the search result images to be higher as the hierarchies of the classified groups are closer to each other.

In addition, in the above-described embodiment, a case where the user designates the button B1 or the button B2 to assign the evaluation to the search result image on the search result display screen has been described, but the disclosed technology is not limited to this aspect. As illustrated in FIG. 11 as an example, on the search result display screen, different evaluations may be assigned to the search target image depending on the display position of the display region A2. In this case, for example, the user moves the search result image to which the positive evaluation is assigned to the display region A2 located on the left side, and moves the search result image to which the negative evaluation is assigned to the display region A2 located on the right side.

In addition, as illustrated in FIG. 11, the search result display screen may include a display region A3 in which the search result image that is not used for the search for obtaining the second search result image group is displayed, in addition to the display region A2 in which the search result image to which the evaluation by the user is assigned is displayed. After grouping for the search, the user moves the search result image group that is to be kept as a group but not used for the next search, to the display region A3. In the above-described embodiment, the display region A2 in which both the button B1 and the button B2 are not designated may be used as the display region A3.

In addition, in the above-described embodiment, the display control unit 66 may perform control to display only the search result image of which the search rank is equal to or higher than the threshold value in the search result image group in the display region A1. The display control unit 66 or the server apparatus 14 may perform the selection of the search result image of which the search rank is equal to or higher than the threshold value in this case.

In addition, in the above-described embodiment, the evaluation assigned to the search result image by the user is not limited to two stages of the positive evaluation or the negative evaluation, and may be, for example, a numerical value.

In addition, in the above-described embodiment, at least a part of the functional unit provided in the server apparatus 14 may be provided in the user terminal 12, or at least a part of the functional unit provided in the user terminal 12 may be provided in the server apparatus 14. In addition, one computer may include each functional unit provided in the user terminal 12 and the server apparatus 14.

In addition, in the embodiment, for example, the following various processors can be used as a hardware structure of a processing unit that executes various types of processing, such as each functional unit of the user terminal 12 and each functional unit of the server apparatus 14. As described above, in addition to the CPU that is a general-purpose processor that executes software (program) to function as various processing units, the various processors include a programmable logic device (PLD) that is a processor whose circuit configuration can be changed after manufacture, such as a field programmable gate array (FPGA), and a dedicated electric circuit that is a processor having a circuit configuration that is designed for exclusive use in order to execute a specific process, such as an application specific integrated circuit (ASIC).

One processing unit may be configured by one of the various processors, or may be configured by a combination of the same or different types of two or more processors (for example, a combination of a plurality of FPGAs or a combination of the CPU and the FPGA). Alternatively, a plurality of processing units may be composed of one processor.

A first example of the configuration in which the plurality of processing units are configured by one processor is a form in which one processor is configured by a combination of one or more CPUs and software and the processor functions as the plurality of processing units, as represented by the computer, such as a client and a server. Second, as typified by a system on chip (SoC) or the like, there is a form in which a processor that implements functions of the entire system including the plurality of processing units on one integrated circuit (IC) chip is used. In this manner, various processing units are configured by using one or more of the various processors as a hardware structure.

Furthermore, as the hardware structure of the various processors, more specifically, an electric circuit (circuitry) in which circuit elements such as semiconductor elements are combined can be used.

Further, in the above-described embodiment, a form in which the information processing program 30 is stored (installed) in the storage unit 22 in advance has been described, but the present disclosure is not limited thereto. The information processing program 30 may be provided in a form of being recorded on a recording medium such as a compact disc read only memory (CD-ROM), a digital versatile disc read only memory (DVD-ROM), and a Universal Serial Bus (USB) memory. A form may be employed in which the information processing program 30 may be downloaded from an external device via a network.

Further, in the above-described embodiment, a form in which the search program 50 is stored (installed) in the storage unit 42 in advance has been described, but the present disclosure is not limited thereto. The search program 50 may be provided in a form of being recorded on a recording medium such as a CD-ROM, a DVD-ROM, and a USB memory. In addition, the search program 50 may be downloaded from an external device via a network.

The disclosure of JP2023-189547 filed on November 6, 2023 is incorporated in the present specification by reference. All documents, patent applications, and technical standards disclosed in the present specification are incorporated in the present specification by reference to the same extent as in a case where each of the documents, patent applications, technical standards are specifically and individually indicated to be incorporated by reference.

## Claims

1. An information processing apparatus comprising:
at least one processor,
wherein the processor is configured to:
acquire a first search result image group as a search result in response to a search input for a search target image group;
present a user interface configured to receive input of an evaluation by a user for at least one search result image included in the first search result image group; and
acquire a second search result image group as a re-search result for the search target image group based on the search result image to which the evaluation by the user is assigned via the user interface.

2. The information processing apparatus according to claim 1,
wherein the processor is configured to acquire the second search result image group for the search target image group based on the search input and the search result image to which the evaluation by the user is assigned via the user interface.

3. The information processing apparatus according to claim 1 or 2,
wherein the evaluation by the user includes at least a positive evaluation, and
in the second search result image group, a search rank of an image, among the search target image group, having a high similarity to the search result image to which the positive evaluation is assigned is set higher.

4. The information processing apparatus according to claim 1 or 2,
wherein the evaluation by the user includes at least a negative evaluation, and
in the second search result image group, a search rank of an image, among the search target image group, having a high similarity to the search result image to which the negative evaluation is assigned is set lower.

5. The information processing apparatus according to claim 1 or 2,
wherein the user interface includes a display region for classifying at least a part of the first search result image group into groups.

6. The information processing apparatus according to claim 5,
wherein the processor is configured to select, from among a plurality of different conversion processes of converting the search result images included in the first search result image group into vectors, the conversion process in which a similarity between the search result images classified into the same group is relatively high.

7. The information processing apparatus according to claim 6,
wherein the processor is configured to convert each of the search result images included in the first search result image group into a vector by the selected conversion process, and
the similarity corresponds to a distance using the vectors obtained by the conversion.

8. The information processing apparatus according to claim 5,
wherein the user interface includes an interface configured to receive input of the evaluation by the user for each group.

9. The information processing apparatus according to claim 3,
wherein in a case where the positive evaluation is assigned to a plurality of the search result images, the similarity is a statistical value of similarities to each of the plurality of search result images to which the positive evaluation is assigned.

10. The information processing apparatus according to claim 4,
wherein in a case where the negative evaluation is assigned to a plurality of the search result images, the similarity is a statistical value of similarities to each of the plurality of search result images to which the negative evaluation is assigned.

11. The information processing apparatus according to claim 3,
wherein the user interface includes an interface configured to receive input of the evaluation by the user for each group for the search result images included in the first search result image group, and
the processor is configured to perform weighting on the similarity in accordance with a search priority for each group in a case where the first search result image group is classified into a plurality of different groups.

12. The information processing apparatus according to claim 5,
wherein the user interface includes an interface capable of classifying the first search result image group into groups having a hierarchical structure, and
the closer the hierarchy of the classified groups is, the higher the similarity between the search result images is.

13. The information processing apparatus according to claim 1 or 2,
wherein the user interface includes a display region in which the search result image to which the evaluation by the user is assigned is displayed, and a display region in which the search result image not used for the search for obtaining the second search result image group is displayed.

14. The information processing apparatus according to claim 1 or 2,
wherein the user interface includes a user interface configured to receive input of the evaluation by the user by an operation of the user for at least one search result image included in the first search result image group.

15. An information processing method executed by a processor provided in an information processing apparatus, the method comprising:
acquiring a first search result image group as a search result in response to a search input for a search target image group;
presenting a user interface configured to receive input of an evaluation by a user for at least one search result image included in the first search result image group; and
acquiring a second search result image group as a re-search result for the search target image group based on the search result image to which the evaluation by the user is assigned via the user interface.

16. An information processing program causing a processor provided in an information processing apparatus to execute a process comprising:
acquiring a first search result image group as a search result in response to a search input for a search target image group;
presenting a user interface configured to receive input of an evaluation by a user for at least one search result image included in the first search result image group; and
acquiring a second search result image group as a re-search result for the search target image group based on the search result image to which the evaluation by the user is assigned via the user interface.
